## Europäisches Patentamt

## European Patent Office

## Office européen des brevets

(19)

(11) Veröffentlichungsnummer: **0 144 517**

**A2**

(12) # EUROPÄISCHE PATENTANMELDUNG

(21) Anmeldenummer: **84109388.3**

(22) Anmeldetag: **08.08.84**

(51) Int. Cl.⁴: **B 05 B 7/04**
**B 05 B 15/02, B 05 B 12/14**

(30) Priorität: **13.12.83 DE 3345049**

(43) Veröffentlichungstag der Anmeldung:
**19.06.85 Patentblatt 85/25**

(84) Benannte Vertragsstaaten:
**AT BE CH DE FR GB IT LI LU NL SE**

(71) Anmelder: **Dietachmair, Herbert**
**Hofriedenstrasse 26**
**A-6911 Lochau(AT)**

(72) Erfinder: **Dietachmair, Herbert**
**Hofriedenstrasse 26**
**A-6911 Lochau(AT)**

(74) Vertreter: **Riebling, Günter, Dr. et al,**
**Patentanwälte Dr.-Ing., Dipl.-Ing., Ing.(grad) Günter**
**Riebling Dr.-Ing., Dipl.-Ing. Peter Riebling Rennerle 10**
**Postfach 3160**
**D-8990 Lindau (Bodensee)(DE)**

(54) **Mischpistole für reaktive Mehrkomponenten-Materialien.**

(57) Die Mischpistole für reaktive Mehrkomponenten-Materialien weist in einer Mischkammer einen sich drehenden Mischrotor auf, wobei mehrere im Durchlaß gesteuerte Ventile für die Einführung jeweils einer Komponente in die Mischkammer münden. Zusätzlich sind Ventile für die Zuführung von Reinigungsflüssigkeit und Druckluft vorhanden. Um bei Reinigung der Mischkammer die verbrauchte Reinigungsflüssigkeit nicht über den Auslaß der Mischpistole abgeben zu müssen, was mit der Abgabe von gefährlichen und schädlichen Dämpfen und Gasen verbunden wäre, ist ein zusätzliches Auslaßventil an der Mischkammer angeordnet, mit dem die Entfernung der verbrauchten Reinigungsflüssigkeit erfolgt. Die Reinigungsflüssigkeit wird also in der Mischkammer in einem geschlossenen Kreislauf geführt und kommt niemals in Berührung mit der Außenumgebung der Mischpistole.

EP 0 144 517 A2

./...

Mischpistole für reaktive Mehrkomponenten-
Materialien
--------------------------------------------

Die Erfindung betrifft eine Mischpistole für reaktive
Mehrkomponenten-Materialien, z.B. Polyol, Isocynat,
Silikone, Epoxy-Harze, bleihaltige Farben und dgl., bei
der in einer Mischkammer ein sich drehender Mischrotor
angeordnet ist und in die mehrere, im Durchlaß gesteuerte
Ventile für die Einführung jeweils einer Komponente in
die Mischkammer, für die Zuführung von Reinigungsflüssigkeit und Druckluft münden.

Ferner bezieht sich die Erfindung auf ein Verfahren zur
Reinigung dieser Mischpistole.

Mischpistolen für reaktive Mehrkomponenten-Materialien
sind bekannt. Bei diesen bekannten Ausführungen wird,
wenn der Arbeitsvorgang unterbrochen wird, zur Reinigung
in die Mischkammer Reinigungsflüssigkeit, ggf. unter
Druck, eingeführt und die verunreinigte Reinigungsflüssigkeit gelangt dann aus der Auslaßdüse, aus der normalerweise das zu verarbeitende Material abgeht, in irgendeinen Behälter.

Bei diesen Ausführungen hat man den Nachteil, daß bei der
Verarbeitung reaktiver Mehrkomponenten unter Umständen
giftige Dämpfe entstehen, so daß das Arbeiten entweder
sehr gefährlich ist, oder aber durch umfangreiche Absauganlagen für die Sicherheit der Bedienenden gesorgt werden
muß.

Es ist auch eine gewisse Umweltbelastung dadurch vorhanden, daß wenn diese Dämpfe abgesaugt werden, sie irgendwie in die Außenluft gelangen und dort zu Schäden führen können.

Weiterer Nachteil bei der bekannten Ausführung bzw. dem bekannten Verfahren ist auch, daß die verunreinigte Reinigungsflüssigkeit so stark mit dem Mehrkomponentenmaterial angereichert ist, daß deren Wiederverwendung bzw. Trennung in Reinigungsflüssigkeit und Material nicht möglich ist, andererseits aber auch noch nicht eine solche Aushärtung erfolgt, daß man gefahrlos diese Reinigungsabfälle aufbewahren könnte.

Hier setzt die Erfindung ein, indem sie es mit einfachen Mitteln ermöglicht, ohne irgendwelche Umweltbelastung und/oder Gefährdung der Bedienenden die Reinigung rasch und wirkungsvoll durchzuführen, und im übrigen es dann auch gelingt, daß man durch Recycling die verunreinigten Materialien voneinander trennen und wiederverwenden kann.

Die Lösung der Aufgabe nach der Erfindung besteht darin,daß ein zusätzliches Auslaßventil aus der Mischkammer für die Entfernung der verbrauchten Reinigungsflüssigkeit vorgesehen ist.

Es wird hier ein vollkommen neuer Weg beschritten. Es wird nicht mehr gewissermassen die Mischkammer durchgespült, sondern dadurch, daß der Auslaß für das zu spritzende Material zu schließen geht, wird die ggf. unter Druck zugeführte Reinigungsflüssigkeit solange im Kreislauf in der Mischkammer geführt, bis eine solche Druckerhöhung vorhanden ist, daß eine gewisse Anreicherung der Reinigungsflüssigkeit mit dem restlichen Material vorhanden ist.

Dieser Druckanstieg, der einstellbar gemacht werden kann, führt dann dazu, daß ein zusätzliches Auslaßventil geöffnet wird und jetzt gelangt dann in einen Extra-Behälter dieses verunreinigte Reinigungsmaterial.

In einer weiteren Ausführungsform ist es vorgesehen, daß die Öffnung des der verunreinigten Reinigungsflüssigkeit zugeordneten Auslaßventils nicht durch Überdruck der Mischkammer erfolgt, sondern zeitgesteuert. Wenn beispielsweise die Reinigungsflüssigkeit für ein oder zwei Minuten in der Mischkammer unter Verwirbelung mit dem Mischrotor rotierte, wird nach Ablauf dieser Zeit das Auslaßventil geöffnet, und die verunreinigte Reinigungsflüssigkeit wird abgelassen.

Bei beiden Ausführungsformen hat man den Vorteil, daß in diesem Behälter sich nur verunreinigtes Reinigungsmaterial befindet, dessen Konzentration einstellbar ist. Der gewissermaßen als Vorlauf zu bezeichnende Vorgang beim Einstellen der Mischkomponenten wird jetzt in einen Extra-Behälter geleitet. Bei diesem Vormischen oder dem Vorlauf werden solange Komponenten zugeführt, bis das Arbeitsmaterial eine gewünschte Zusammensetzung hat bzw. ausreichend gemischt ist.

Dieses Material, welches jetzt ausreichend gemischt ist, weist keine Umweltbelastung auf.

Um die Druckverhältnisse den verschiedenen Viskositäten anpassen zu können, ist es ein weiteres Merkmal der Erfindung, daß das zusätzliche Auslaßventil einen regelbaren Auslaßquerschnitt, z.B. einen einstellbaren Verschlußkegel, aufweist.

Wesentlich ist noch, daß die Mischkammer Vorrichtungen, z.B. Leitflächen, für eine Zirkulierung der Reinigungsflüssigkeit aufweist.

Auch bei dieser Ausführung ist es jetzt möglich, mit einem geringsten Aufwand einer Reinigungsflüssigkeit einen größten Reinigungseffekt zu erreichen.

Bei den bisherigen, mit Durchfluß zu reinigen Mischkammern, waren Hinterschneidungen oder strömungsungünstige Ecken vorhanden, so daß übermässig viel Reinigungsflüssigkeit oft verwandt werden musste, um die Mischkammer zu reinigen.

Das war ein hoher Aufwand, insbesondere auch, wenn Reinigungsflüssigkeiten verwandt wurden, die schädliche Dämpfe erzeugen. Bildet man die Mischkammer so aus, daß nun erst die Reinigungsflüssigkeit zirkuliert, ohne daß nun im Strömungsschatten irgendwelche Vorsprünge usw. liegen, dann hat man mit sehr wenig Reinigungsflüssigkeit erreicht, daß in kurzer Zeit die Mischkammer gereinigt ist.

Wesentlich ist ferner, daß eine Verbindungsleitung zwischen dem zusätzlichen Auslaßventil und einem Recycling-Behälter vorhanden ist.

Im Gegensatz zu den bisher bekannten Verfahren wird also jetzt nicht mehr die verunreinigte Reinigungsflüssigkeit in irgendwelche offenen Behälter geführt, und es müssen auch nicht teure Absaugvorrichtungen vorhanden sein, sondern es werden Extra-Behälter verwendet, in denen man einstellbar die nach den Druckverhältnissen der Mischkammer bestimmten Mischungsverhältnisse von Reinigungsflüssigkeit und zu entfernendem Material

-5-

erzeugen kann.

Wichtig ist auch noch, daß die Austrittsöffnung des Ventils für die Reinigungsflüssigkeit so angeordnet ist, daß ein Kreislauf des Reinigungsmittels in der Mischkammer entsteht.

Man kann hier also auf zusätzliche mechanische Vorrichtungen verzichten, um den Kreislauf zu erzeugen; die Einströmrichtung des Reinigungsmittels ist so gewählt, daß alleine durch diese Einströmrichtung ein Kreislauf in der Mischkammer sich bildet.

Gegenüber den bisher bekannten Verfahren zur Reinigung der Mischkammer unterscheidet sich das neue Verfahren durch eine andere zeitliche Reihenfolge der verschiedenen Arbeitsschritte.

Ausgehend von einem Verfahren zur Reinigung der Mischkammer einer Mischpistole mit Auslaßdüse durch Zufluß einer druckbeaufschlagten Reinigungsflüssigkeit und Abfluß der verunreinigten Flüssigkeit aus einem Auslaß geht man jetzt in zeitlicher Reihenfolge so vor:

1. Zuerst wird die Auslaßdüse geschlossen, anschließend wird dann
2. eine Reinigungsflüssigkeit in die Mischkammer zweckmässig im Kreislauf geführt, und
3. wird abhängig von dem höheren Druck in der Mischkammer, der von der Viskosität der Mischung von Reinigungsflüssigkeit im Verhältnis zum reaktiven Material entsteht, das Auslaßventil geöffnet.

Als zweckmässig hat es sich erwiesen, daß die Mischkammer kegelförmig ausgebildet ist und der Mischrotor in jeder Form angepasst wird.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte, räumliche Ausbildung werden als erfindungswesentlich beansprucht, soweit sie einzeln oder in Kombination gegenüber dem Stand der Technik neu sind.

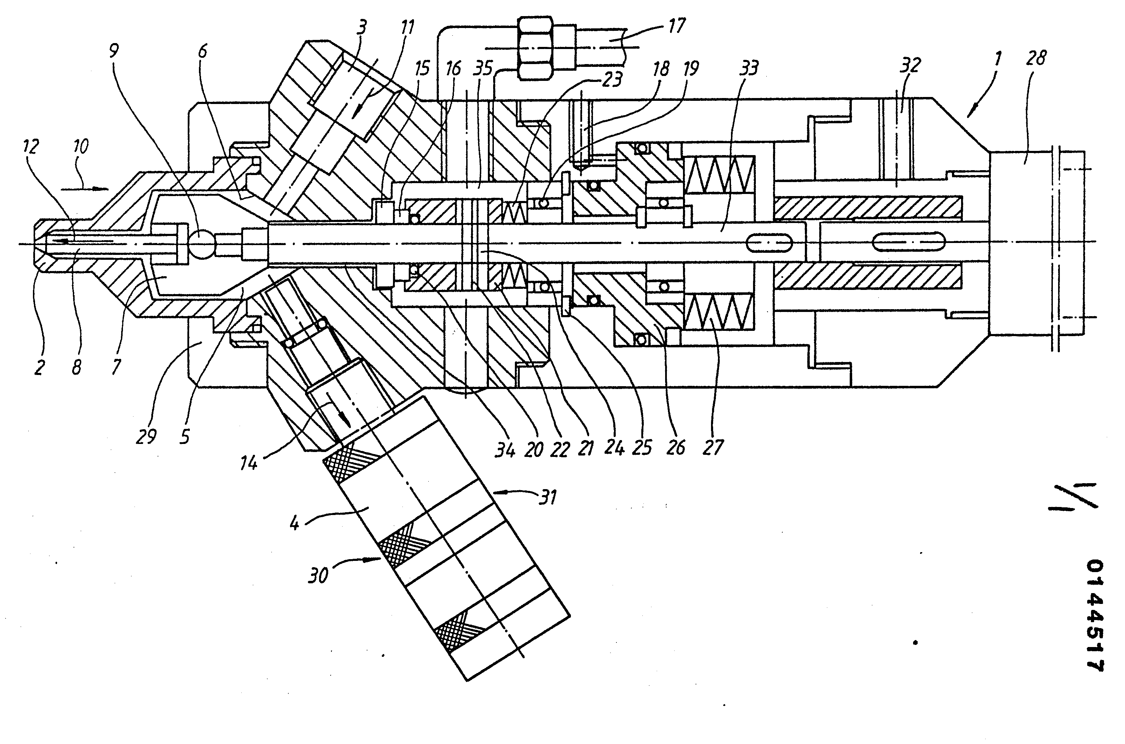

Im folgenden wird die Erfindung anhand einer lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Die Mischpistole 1 besteht aus einem zylinderförmigen Grundkörper, an dessen Rückseite in axialer Richtung ein Druckluftmotor 28 angeflanscht ist, der mit seiner Antriebswelle mit der Antriebswelle 33 der Mischpistole verbunden ist. Die Verbindung zwischen beiden Wellen erfolgt im Bereich einer Büchse, wobei die Antriebswelle 33 der Mischpistole in dieser Büchse axial verschiebbar ist. Über die Bohrung 32 am Gehäuse der Mischpistole kann die Drehzahl des mit der Antriebswelle 33 drehfest verbundenen Mischrotor 7 abgenommen werden. Die Antriebswelle steht über ein Kugellager mit dem Hubkolben 26 in Verbindung, der in axialer Richtung durch eine Druckfeder 27 vorbelastet wird. Wird über einen Steuerluft-Anschluß 18 Steuerluft auf die Vorderseite des Hubkolbens

0144517

26 gegeben, dann wird dieser zusammen mit der Antriebswelle 33 axial nach hinten verschoben, wodurch der den Auslaß 2 der Mischpistole verschließende Verschlußstempel 8 zurückgezogen wird und das Mehrkomponenten-Material in Pfeilrichtung 12 über den Auslaß 2 abgegeben wird. Hierzu wird also der Verschlußstempel 8 in Pfeilrichtung 10 nach hinten bewegt.

An einem Seegerring 25 anliegend ist ein weiteres Kugellager 19 vorgesehen, das sich mit seinem feststehenden Teil am Gehäuse der Mischpistole 1 abstützt. Axial gegen das Kugellager 19 stützt sich eine Druckfeder 23 ab, die Teil eines Sicherheitsventils ist. Das Sicherheitsventil besteht aus einem axial auf der Antriebswelle 33 verschiebbaren Druckstück 21, welches unter der Kraft der Druckfeder 23 gegen eine mitrotierende Scheibe 16 gepresst wird, die gegenüber dem Druckstück in einem O-Ring 20 gelagert ist. Die rotierende Scheibe 16 drückt auf eine am Gehäuse der Mischpistole fest eingepresste Scheibe 15. Bei Überdruck in der Mischkammer 5 der Mischpistole 1 entweicht das Material in der Mischkammer über die axiale Bohrung 34 und hebt die rotierende Scheibe 16 von der feststehenden Scheibe 15 entgegen der Kraft der Druckfeder 23 ab, wodurch das Material in die Bohrung 35 erweiterten Durchmessers gelangt und von dort aus über den Sicherheitsauslaß 17 einem Recycling-Behälter zugeführt wird.

Das Druckstück 21 ist mit Hilfe eines Mitnehmerstiftes 22 axial verschiebbar dadurch auf der Antriebswelle gehalten, daß der Mitnehmerstift 22 in einem Schlitz 24 größerer axialer Länge gehalten ist.

Der Mischrotor 7 ist drehfest mit der Antriebswelle 33 verbunden. Die hintere Stirnseite des Verschlußstempels 8 drückt über die Kugel 9 auf die vordere Stirnseite der Antriebswelle 33. Die Kugel 9 wirkt hierbei als Drehlager, so daß der Verschlußstempel 8 während der Drehung des Mischrotors 7 stehen bleibt.

In nur angedeuteter Weise sind am Umfang der Mischpistole verteilt beispielsweise fünf verschiedene Ventile angeordnet, wobei der Übersichtlichkeit halber lediglich ein einziges Ventil im unteren Teil der Abbildung dargestellt wurde, während im oberen Teil nur die abgestufte Bohrung für den Einsatz des Einlaßventils 3 vorgesehen ist.

Die beispielsweise in der Anzahl von fünf angeordneten Ventile haben unterschiedliche Funktionen. Es sind beispielsweise zwei Medium-Ventile vorhanden, um jeweils eine Komponente des Materials in die Mischkammer 5 einzuführen. Es ist ferner ein Einlaßventil 3 für die Einführung von Reinigungsflüssigkeit vorhanden. Dem Einlaßventil 3 vorzugsweise gegenüberliegend ist ein Auslaßventil 4 für den Auslaß der verbrauchten Reinigungsflüssigkeit aus der Mischkammer 5 vorgesehen. Es ist ferner dann (nicht gezeigt) ein Luftventil vorhanden, mit dem die gereinigte Mischkammer trockengeblasen wird.

In der Darstellung sind - wie schon dargestellt - lediglich das Einlaßventil 3 für die Einführung der Reinigungsflüssigkeit und das Auslaßventil 4 für den Ablaß der verbrauchten Reinigungsflüssigkeit gezeigt, während die Mediumventile und das Luftventil nicht gezeigt sind.

Nach Vollendung des Mischvorganges, d.h. nach Herstellung eines reaktiven Mehrkomponenten-Materials, ist die Mischpistole 1 fertig zur Abgabe dieses Materials über den Auslaß 2. Über den Steuerluft-Anschluß 18 wird der Hubkolben 26 in Pfeilrichtung 10 nach rückwärts bewegt, wodurch sich die Antriebswelle 33 nach hinten verschiebt und der Verschlußstempel 8 von der Mündung des Auslasses 2 abhebt, wodurch das in der Mischkammer 5 eingebrachte Mehrkomponenten-Material über den Auslaß 2 in Pfeilrichtung 12 verspritzt wird. Der erforderliche Spritzdruck wird über den Zuführungsdruck bei den Medium-Einlaßventilen eingestellt.

Bei Unterbrechung des Arbeitsvorganges oder Beendigung desArbeitsvorganges wird die Mischkammer 5 nach dem erfindungsgemässen Verfahren gereinigt. Es werden die Mediumventile geschlossen und es wird das Einlaßventil 3 bei geschlossenem Auslaßventil 4 geöffnet, wodurch in Pfeilrichtung 11 die Reinigungsflüssigkeit in die Mischkammer eingeführt wird, wobei gleichzeitig der Mischrotor 7 umläuft. Aufgrund der kegelförmigen Formgebung der Mischkammer 5 mit einem im hinteren Bereich angeordneten kegelförmigen Ansatz 6 erfolgt eine dauernde Durchmischung und Rotation der Reinigungsflüssigkeit im Bereich der Mischkammer 5, wobei der Mischrotor 7 ebenfalls einen rückseitigen kegelförmigen Ansatz aufweist, was die Rotation der Reinigungsflüssigkeit stark begünstigt.

Nachdem die Reinigungsflüssigkeit mit laufendem Mischrotor 7 eine Weile in der Mischkammer 5 zirkuliert hatte, wird zeitgesteuert das Auslaßventil 4 geöffnet, dadurch, daß ein Verschlußstempel von seinem O-Ring-Dichtsitz abhebt, wodurch die verbrauchte Reinigungsflüssigkeit in Pfeilrichtung 14 über die Bohrung 31 ausgelassen wird.

An der Bohrung 31 ist eine Verbindungsleitung zu dem Recycling-Behälter angeschlossen, so daß eine schädliche Umweltbelastung durch die Entwicklung gefährlicher Dämpfe oder Gase vermieden wird.

Die Steuerung des Auslaßventils 4 erfolgt über den Druckluftanschluß 30.

Der gesamte Spritzkopf der Mischpistole 1 ist abnehmbar und wird mit einer Überwurfmutter 29 am Gehäuse der Mischpistole 1 gehalten.

Statt der Steuerung des Auslasses der verbrauchten Reinigungsflüssigkeit aus dem Auslaßventil 4 über eine Zeitsteuerung ist auch eine Drucksteuerung möglich. Dies würde dann (in nicht näher dargestellter Weise) so erfolgen, daß im Auslaßventil 4 ein Überdruckventil vorhanden ist, welches bei Überschreiten eines bestimmten voreingestellten Druckes öffnet und die verbrauchte Reinigungsflüssigkeit aus der Bohrung 31 ausfließen lässt.

Während des Betriebes der Mischpistole rotiert der Mischrotor 7 mit einer Drehzahl von ca. 5000 Umdrehungen pro Minute.

P a t e n t a n s p r ü c h e

1. Mischpistole für reaktive Mehrkomponenten-Materialien, z.B. Polyol, Isocynat, Silikone, Epoxy-Harze, bleihaltige Farben und dgl., bei der in einer Mischkammer (5) ein sich drehender Mischrotor (7) angeordnet ist und in die mehrere, im Durchlaß gesteuerte Ventile (3) für die Einführung jeweils einer Komponente in die Mischkammer (5), für die Zuführung von Reinigungsflüssigkeit und Druckluft münden,
d a d u r c h   g e k e n n z e i c h n e t , daß ein zusätzliches Auslaßventil (4) aus der Mischkammer (5) für die Entfernung der verbrauchten Reinigungsflüssigkeit vorgesehen ist.

2. Mischpistole nach Anspruch 1, d a d u r c h g e k e n n z e i c h n e t , daß das Auslaßventil (4) einen regelbaren Auslaßquerschnitt, z.B. einen einstellbaren Verschlußkegel aufweist.

3. Mischpistole nach Anspruch 1, d a d u r c h g e k e n n z e i c h n e t , daß die Mischkammer (5) Leitflächen (Ansätze 6) für die Zirkulation der Reinigungsflüssigkeit aufweist.

4. Mischpistole nach Anspruch 1, d a d u r c h g e k e n n z e i c h n e t , daß die Mischkammer (5) über ein federbelastet in Schließstellung gehaltenes Sicherheitsventil (15,16) mit einem Sicherheitsauslaß (17) verbunden ist.

5. Mischpistole nach Anspruch 1, d a d u r c h g e k e n n z e i c h n e t , daß das zusätzliche Auslaßventil (4) über eine Verbindungsleitung mit einem Recycling-Behälter verbunden ist.

-12-

6. Mischpistole nach Anspruch 1, d a d u r c h g e k e n n z e i c h n e t , daß die Mündung des Einlaßventils (3) in die Mischkammer (5) so angeordnet ist, daß beim Einströmen der Reinigungsflüssigkeit ein Kreislauf in der Mischkammer (5) entsteht.

7. Mischpistole nach Anspruch 1 oder 6, d a d u r c h g e k e n n z e i c h n e t , daß die Mischkammer (5) kegelförmig ausgebildet ist und daß der Mischrotor (7) dieser Form angepasste Hinterschneidungen aufweist.

8. Verfahren zur Reinigung der Mischkammer einer Mischpistole für reaktive Mehrkomponenten-Materialien, wobei über ein Einlaßventil eine druckbeaufschlagte Reinigungsflüssigkeit in die Mischkammer eingeführt und die verunreinigte Reinigungsflüssigkeit über einen Auslaß entfernt wird, d a d u r c h g e k e n n z e i c h n e t , daß

1. zuerst die Auslaßdüse (2,8) geschlossen wird,

2. daß eine Reinigungsflüssigkeit, z.B. Methylenclorid, Trichlormethylen, Methyläthylketon usw. in die Mischkammer (5) strömt,

3. daß während des Einströmens der Reinigungsflüssigkeit der Mischrotor (7) dreht,

4. daß nach eingestelltem Zeitablauf das zusätzliche Auslaßventil (4 ) öffnet und die verbrauchte Reinigungsflüssigkeit auslässt.